# FASCICULE DE BREVET EUROPEEN

(11) **EP 3 553 941 B1**
(45) Date de publication et mention de la délivrance du brevet: **26.05.2021**
(21) Numéro de dépôt: 19168707.8
(22) Date de dépôt: 11.04.2019
(51) Int. Cl.: H02S 20/10, H02S 20/22

(54) **MODULE PHOTOVOLTAÏQUE SANS CADRE ET PROCÉDÉ DE FABRICATION D'UN TEL MODULE**
FOTOVOLTAIKMODUL OHNE RAHMEN UND HERSTELLUNGSVERFAHREN EINES SOLCHEN MODULS
PHOTOVOLTAIC MODULE WITHOUT FRAME AND METHOD FOR MANUFACTURING SUCH A MODULE

(30) Priorité: 12.04.2018 FR 1853215
(43) Date de publication de la demande: 16.10.2019
(73) Titulaire: Commissariat à l'Energie Atomique et aux Energies Alternatives, 75015 Paris (FR)
(72) Inventeur: COMMAULT, Benjamin, 38054 Grenoble Cedex 09 (FR)
(74) Mandataire: Cabinet Camus Lebkiri

(56) Documents cités:
- EP-A1- 2 267 793
- US-A1- 2016 365 827
- US-A1- 2017 163 210

## Description

### DOMAINE TECHNIQUE

La présente invention concerne un module photovoltaïque sans cadre dont la structure est maintenue au moyen d'une ou plusieurs entretoises. L'invention concerne également un procédé de fabrication d'un tel module photovoltaïque.

L'invention trouve des applications dans le domaine de l'énergie solaire et, en particulier, dans le domaine des modules photovoltaïques.

### ETAT DE LA TECHNIQUE

Dans le domaine de l'énergie solaire, il est connu d'utiliser des modules photovoltaïques pour transformer les rayonnements solaires en énergie électrique. Un module photovoltaïque, appelé aussi panneau photovoltaïque, comprend une pluralité de cellules photovoltaïques de même type de technologie, adaptées pour transformer les rayonnements lumineux provenant du soleil en énergie électrique.

Dans une cellule photovoltaïque, en particulier une cellule photovoltaïque à base de silicium telle qu'une cellule photovoltaïque à homojonction ou à hétérojonction, les porteurs de charge photogénérés, qui contribuent à la génération du courant électrique dans la cellule photovoltaïque, sont collectés grâce à un réseau d'électrodes déposé sur au moins une des deux faces de la cellule, généralement d'une part sur la face qui reçoit directement le rayonnement lumineux, appelée face avant et d'autre part sur la face arrière. Une cellule photovoltaïque peut être monofaciale ou bifaciale. Dans le cas d'une cellule monofaciale, seule la face avant de la cellule reçoit le rayonnement lumineux ; la face arrière est généralement recouverte d'une couche métallique pleine. Dans le cas d'une cellule bifaciale, la face avant reçoit le rayonnement lumineux direct (en provenance directe de la source lumineuse) et la face arrière reçoit le rayonnement lumineux réfléchi.

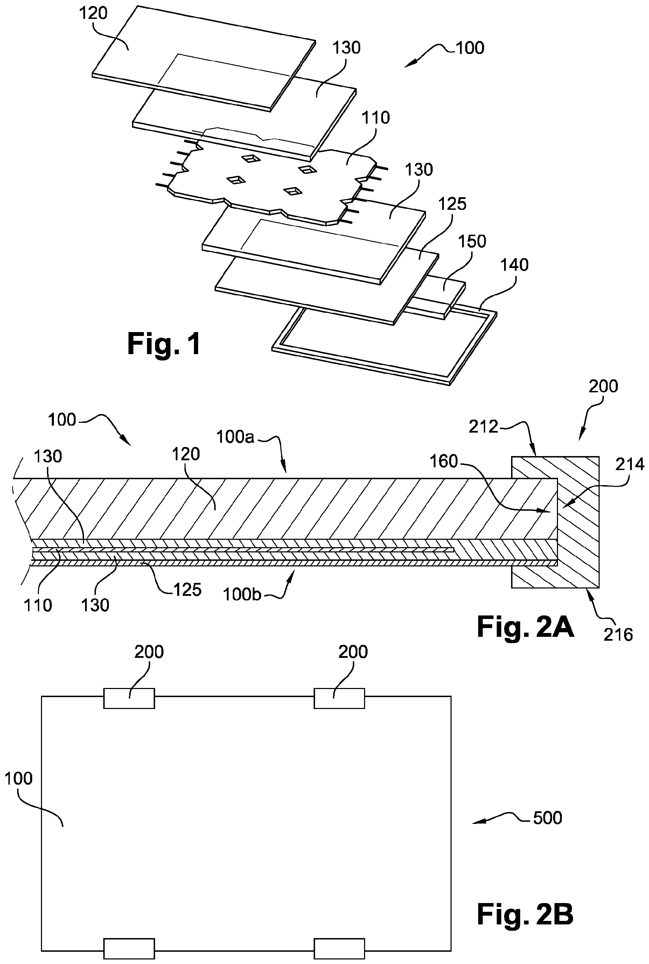

Pour former un module photovoltaïque 500, tel que celui représenté sur les figures 1 et 2A-2B, les cellules photovoltaïques sont connectées entre elles, en série et/ou en parallèle, et forment un ensemble 110 de cellules photovoltaïques interconnectées qui collecte l'énergie électrique produite par chacune des cellules. Les cellules photovoltaïques sont connectées les unes aux autres par l'intermédiaire d'une connectique de jonction 150 implantée sous la face arrière du module photovoltaïque 500 ou sur les côtés dudit module, par exemple dans un cadre 140 entourant ledit module lorsqu'un cadre existe.

L'ensemble 110 de cellules photovoltaïques interconnectées est généralement encapsulé entre deux couches de protection :
- une couche de protection 120 en verre, pour la face avant qui reçoit les rayonnements lumineux, et
- une couche de protection 125, pour la face arrière, en polymère lorsque le module est monofacial ou en verre lorsque le module est bifacial,
une couche de matériau encapsulant 130 transparent étant disposée entre l'ensemble de cellules photovoltaïques 110 et chacune des couches de protection 120, 125.

L'ensemble multicouche comportant l'ensemble 110 de cellules photovoltaïques interconnectées, les couches d'encapsulation 130 et les couches de protection 120, 125 est laminé et appelé structure laminée 100. Classiquement, cette structure laminée 100 est supportée par un cadre métallique 140, généralement en aluminium, qui permet la fixation de ladite structure laminée.

Le cadre métallique étant l'un des éléments les plus chers du module photovoltaïque - après les cellules photovoltaïques - des fabricants de modules photovoltaïques ont choisi de supprimer ce cadre métallique et d'utiliser des pinces de serrage 200 pour fixer les modules photovoltaïques 500 à leur support, comme représenté sur les figures 2A et 2B. Dans ce cas, une ou plusieurs pinces de serrage 200 sont montées en lisière de la structure laminée 100 de sorte à exercer une force transversale sur l'ensemble des couches laminées. Autrement dit, chaque pince de serrage 200 est montée autour d'une arrête 160 de la structure laminée 100 et prend en sandwich ladite structure laminée.

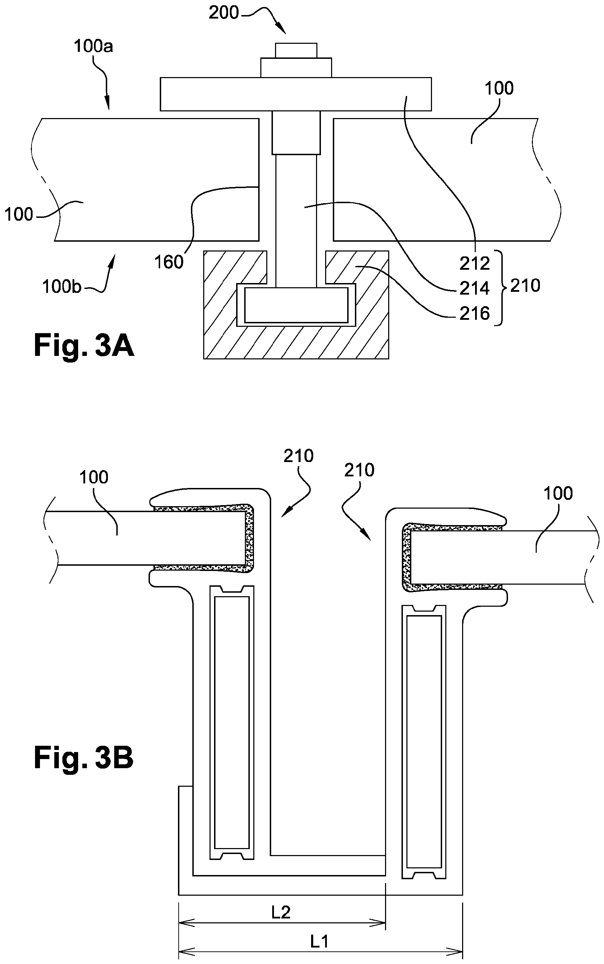

Des exemples de pinces de serrage sont représentés sur les figures 2A et 2B ainsi que sur les figures 3A, 3B. Ces pinces de serrage 200 (appelés clamps en termes anglosaxons) comportent chacune une mâchoire 210 comportant :
- une paroi de blocage 214 positionnée (lorsque la pince est montée sur la structure) parallèlement à l'arrête 160 de la structure laminée 100, et
- des mors 212, 216, fixes ou mobiles, positionnés sensiblement perpendiculaires à la paroi de blocage 214, dans des plans sensiblement parallèles aux plans contenant la face avant 100a et la face arrière 100b de la structure laminée 100.

Ces pinces de serrage 200 permettent, par pression des mors sur les faces avant et arrière de la structure laminée 100, de maintenir ladite structure laminée dans une position prédéterminée et de la fixer sur un support ou à un autre module photovoltaïque, comme montré dans les exemples des figures 3A et 3B.

Toutefois, lorsqu'une forte contrainte extérieure est appliquée au module photovoltaïque, comme un vent fort ou une couche de neige, il arrive que la structure laminée 100 sorte des pinces de serrage 200, ce qui peut entraîner des dommages dudit module photovoltaïque. Dans le but de remédier à ces problèmes de détachement des modules photovoltaïques 500, des fabricants ont proposé de modifier le serrage des pinces de serrage ou de choisir des matériaux dont l'élasticité ou la rugosité assure une meilleure accroche de la structure laminée au sein de la pince de serrage. Cependant, il s'est avéré que ces solutions ne sont pas suffisantes pour s'affranchir des problèmes de détachement des structures laminées.

EP2267793 A1 décrit un panneau solaire avec cadre pouvant être fixé par des pinces de serrage ayant une entretoise insérée dans la face arrière du panneau.

### RESUME DE L'INVENTION

Pour répondre au problème évoqué ci-dessus du détachement des structures laminées, le demandeur propose d'insérer au moins partiellement dans la structure laminée une entretoise destinée à relier ladite structure laminée et la pince de serrage.

Selon un premier aspect, l'invention concerne un ensemble photovoltaïque selon la revendication 1.

Cet ensemble photovoltaïque permet une solidarisation de la structure laminée avec la pince de serrage de sorte que la structure laminée ne peut se détacher de ladite pince même en présence de fortes contraintes.

L'expression « module photovoltaïque sans cadre » sera comprise, dans la description, comme un module photovoltaïque ne comportant pas de cadre métallique destiné, en général, à fixer ledit module photovoltaïque à un châssis.

Dans la suite de la description, la première face de l'ensemble de cellules photovoltaïques sera appelée indifféremment face avant de l'ensemble de cellules photovoltaïques, étant donné que c'est la face qui reçoit en priorité les rayonnements lumineux. La seconde face de l'ensemble de cellules photovoltaïques sera quant à elle appelée indifféremment face arrière de l'ensemble de cellules photovoltaïques.

Selon l'invention, l'entretoise comporte une première extrémité laminée au sein de la structure laminée. Cela assure une insertion relativement simple de l'entretoise au sein de la structure laminée.

La première extrémité de l'entretoise est insérée dans la couche de matériau encapsulant. Cette première extrémité de l'entretoise peut avantageusement être positionnée suivant un plan parallèle à l'ensemble encapsulant la pluralité de cellules photovoltaïques.

Dans la suite de la description, on considèrera que le plan de la structure laminée, et donc le plan de chacune des couches de ladite structure laminée, est le plan dans lequel s'étendent les plus grandes dimensions de la structure laminée, à savoir le plan qui est perpendiculaire à la dimension contenant l'épaisseur de ladite structure. Les termes « transversal » ou « transversalement » s'entendent à travers le plan de la structure laminée, c'est-à-dire suivant la dimension contenant l'épaisseur de ladite structure.

Selon certains modes de réalisation, l'entretoise est une lame. Une partie au moins de cette lame, par exemple celle insérée dans la structure laminée, peut comporter des orifices assurant une bonne encapsulation dans la couche de matériau encapsulant.

Selon certains modes de réalisation, l'entretoise comporte une première extrémité traversant transversalement au moins une partie de la structure laminée. Ces modes de réalisation permettent une bonne solidarisation de la pince de serrage avec la structure laminée.

Selon certains modes de réalisation, l'entretoise est une tige. Cette tige peut être de section ronde, ovale, rectangulaire ou polygonale.

L'entretoise comporte une deuxième extrémité destinée à être bloquée dans la pince de serrage.

Dans certaines variantes, la première extrémité de l'entretoise traverse totalement la structure laminée dans son épaisseur de sorte que l'entretoise est apte à être pincée entre deux mors de la pince de serrage. De cette façon, la pince de serrage est indissociable de la structure laminée.

Dans la suite de la description, la première extrémité de la tige sera appelée également extrémité avant de la tige ou extrémité interne et la seconde extrémité de la tige sera appelée extrémité arrière ou extrémité externe.

Selon un deuxième aspect, l'invention concerne un procédé de fabrication de l'ensemble photovoltaïque défini ci-dessus selon la revendication 4.

De façon avantageuse, ce procédé de fabrication comporte les opérations suivantes :
- fabrication de cellules photovoltaïques et raccordement électrique desdites cellules photovoltaïques de sorte à former un ensemble de cellules photovoltaïques interconnectées,
- pose d'au moins une couche de matériau encapsulant sur la première couche de protection,
- pose de l'ensemble de cellules photovoltaïques,
- pose d'au moins une couche de matériau encapsulant sur la seconde face de l'ensemble de cellules photovoltaïques,
- pose d'une seconde couche de protection en regard de la seconde face de l'ensemble de cellules photovoltaïques,
- lamination de l'ensemble des couches pour former une structure laminée, et
- insertion d'au moins une extrémité d'une entretoise dans la structure laminée.

Le montage du module photovoltaïque peut comporter une opération d'installation d'au moins une pince de serrage en lisière de ladite structure laminée de sorte que l'entretoise solidarise la structure laminée avec la pince de serrage.

Avantageusement, les opérations citées ci-dessus sont réalisées dans l'ordre énoncé, excepté les opérations de lamination de l'ensemble des couches et d'insertion d'une extrémité de l'entretoise qui peuvent être interverties.

Selon certains modes de réalisation, la première extrémité de l'entretoise est insérée dans l'une des couches de matériau encapsulant avant lamination.

Selon d'autres modes de réalisation, une partie au moins de l'ensemble multicouche est percé transversalement avant lamination et avant insertion de l'entretoise.

Selon une variante, le module photovoltaïque comporte une étape supplémentaire consistant à boucher au moins une ouverture réalisée durant l'étape de lamination à l'aide de pièces recouvertes d'un revêtement peu adhérent de type polytétrafluoroéthylène (PTFE) facilitant leur retrait après la lamination.

Selon d'autres modes de réalisation, une partie au moins de l'ensemble multicouche est percé transversalement après lamination et avant insertion de l'entretoise.

De façon avantageuse, la deuxième extrémité de l'entretoise est bloquée dans la pince de serrage.

### BREVE DESCRIPTION DES FIGURES

D'autres avantages et caractéristiques de l'invention apparaîtront à la lecture de la description, illustrée par les figures dans lesquelles :
- La figure 1, déjà décrite, représente une vue éclatée d'un module photovoltaïque classique ;
- Les figures 2A et 2B, déjà décrites, représentent respectivement une vue en coupe de côté et une vue de dessus d'un module photovoltaïque sans cadre, classique ;
- Les figures 3A et 3B représentent des vues en coupe de modules photovoltaïques selon l'art antérieur ;
- La figure 4 représente une vue de dessus d'un module photovoltaïque selon l'invention ;
- La figure 5 représente un diagramme fonctionnel montrant un exemple de procédé de fabrication du module photovoltaïque selon l'invention ;
- Les figures 6A-6B et 7A-7B représentent des vues de côté en coupe de différents modes de réalisation du module photovoltaïque de l'invention ;
- La figure 8 représente une vue de dessus d'un exemple d'entretoise des modes de réalisation des figures 6A-6B et 7A-7B ;
- Les figures 9A,9B et 9C représentent des vues de côté en coupe d'autres modes de réalisation du module photovoltaïque de l'invention.

### DESCRIPTION DETAILLEE D'AU MOINS UN MODE DE REALISATION

Un exemple de réalisation d'un module photovoltaïque, dans lequel la structure laminée est maintenue par une entretoise, est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

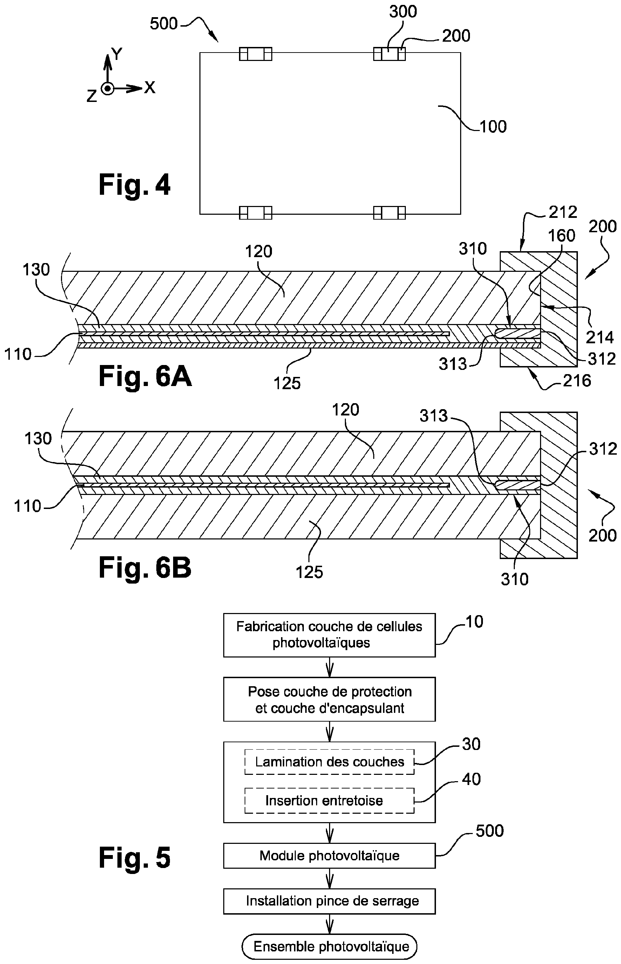

Un exemple d'un module photovoltaïque selon l'invention est représenté selon une vue de dessus sur la figure 4. Ce module photovoltaïque 500 comporte une structure laminée 100, ou ensemble multicouche, du type de celle décrite dans l'état de la technique. Cette structure laminée 100 comporte un ensemble 110 de cellules photovoltaïques ayant une face avant et une face arrière recouvertes chacune d'une couche 130 d'un matériau encapsulant transparent et d'une couche de protection 120, 125. La couche de protection 120 formant la face avant 100a de la structure laminée 100 est généralement une couche de protection en verre. La couche de protection 125 formant la face arrière 100b de la structure laminée 100 peut être également une couche en verre, par exemple lorsque le module photovoltaïque est bifacial ou bien une couche de polymère, par exemple blanc ou opaque, intégrant ou non une feuille d'aluminium, notamment lorsque le module photovoltaïque est monofacial.

Le module photovoltaïque 500 peut être maintenu au moyen de pinces de serrage 200 comme représenté sur la figure 4. Le module photovoltaïque 500 et les pinces de serrage 200 forment un ensemble photovoltaïque. Les pinces de serrage 200 peuvent être d'un type classique, comme celles décrite dans l'état de la technique, ou d'un type spécifique à l'invention comme décrit par la suite. Les pinces de serrage 200 peuvent être des pinces distinctes montées sur la structure laminée 100 et destinées à être fixées sur un support ou un châssis. Les pinces de serrage 200 peuvent également faire partie intégrante du support ou du châssis et permettre une fixation directe de la structure laminée sur ledit support ou châssis.

Selon l'invention, le module photovoltaïque 500 comporte des entretoises 300 assurant chacune une liaison solidaire entre la structure laminée 100 et une des pinces de serrage 200. Dans l'exemple de la figure 4, quatre entretoises 300 et quatre pinces de serrage 200 sont représentées, étant entendu que leur nombre peut varier d'un à plus de quatre en fonction des applications, du support sur lequel le module photovoltaïque doit être fixé, des dimensions de la structure laminée et des dimensions des pinces de serrage.

Comme décrit plus en détail par la suite, pour assurer une liaison solidaire entre la structure laminée 100 et la pince de serrage 200, chaque entretoise 300 comporte un premier tronçon intégré dans la structure laminée 100 et un deuxième tronçon solidarisé avec la pince de serrage 200. En fonction du mode de réalisation, le premier tronçon peut être une extrémité de l'entretoise ou, au contraire, la partie centrale de ladite entretoise et le deuxième tronçon peuvent être, respectivement, une deuxième extrémité de l'entretoise ou chacune des extrémités de ladite entretoise.

Le deuxième tronçon est solidarisé avec la pince de serrage 200 par diverses techniques permettant de bloquer ledit deuxième tronçon dans la pince de serrage ou de fixer ledit deuxième tronçon sur la pince de serrage afin d'empêcher tout déplacement dudit deuxième tronçon, et donc de l'entretoise, par rapport à la pince de serrage.

Le module photovoltaïque de l'invention peut être fabriqué suivant un procédé de fabrication dont un exemple est représenté sur la figure 5. Ce procédé de fabrication peut comporter, par exemple, une opération 10 de fabrication des cellules photovoltaïques et d'interconnexion de ces cellules afin d'obtenir un ensemble 110 de cellules photovoltaïques interconnectées. Selon ce procédé, une couche de protection 120, 125 est ensuite déposée sur la face avant et sur la face arrière de l'ensemble de cellules photovoltaïques avec, interposée entre l'ensemble de cellules photovoltaïques et chaque couche de protection, au moins une couche 130 d'un matériau encapsulant transparent. Deux couches de matériau encapsulant 130 peuvent être déposées, l'une sur la face avant de l'ensemble de cellules photovoltaïques et l'autre sur la face arrière de l'ensemble de cellules photovoltaïques, les deux couches fusionnant lors de l'étape de lamination en une unique couche aux emplacements dépourvus de cellules photovoltaïques, comme par exemple sur le contour de l'ensemble de cellules photovoltaïques. Dans la suite de la description, il sera fait référence à une seule couche de matériau isolant, étant entendu qu'il peut s'agir de deux couches déposées de façon distinctive.

Une fois les différentes couches déposées, celles-ci sont laminées de façon à former une structure laminée 100 et une entretoise 300 est insérée au moins partiellement dans ladite structure laminée. Selon certains modes de réalisation, les différentes couches 110-130 sont laminées dans une étape 30 puis l'entretoise 300 est insérée dans la structure laminée lors d'une étape 40. Selon certains autres modes de réalisation, une partie de l'entretoise 300 est introduite au sein des couches (étape 40) avant que l'ensemble des couches 110-130 ne soit laminé. Autrement dit, en fonction du mode de réalisation choisi, l'étape 40 d'insertion de l'entretoise peut intervenir avant l'étape 30 de lamination des couches ou, au contraire, après l'étape 30 de lamination des couches, comme expliqué en détail par la suite.

Lorsque l'entretoise 300 est insérée dans la structure laminée 100, la pince de serrage 200 peut être montée autour de l'arête 160 de la structure laminée 100, c'est-à-dire en lisière de ladite structure laminée, de façon à prendre en sandwich l'ensemble des couches laminées 110-130 ainsi qu'une partie au moins de l'entretoise 300. Si plusieurs pinces de serrage 200 sont prévues, le montage du module photovoltaïque 500 est terminé lorsque toutes les pinces de serrage ont été installées sur le pourtour de la structure laminée 100 et que toutes les entretoises sont solidarisées avec lesdites pinces. Le module photovoltaïque 500 solidarisé avec les pinces de serrage 200 via les entretoises 300 constitue alors un ensemble photovoltaïque.

Dans les modes de réalisation où l'entretoise 300 est insérée avant lamination, comme par exemple dans les modes de réalisation des figures 6A - 6B, l'entretoise 300 peut être une plaque ou une lame 310, par exemple en polymère ou en métal, insérée totalement ou uniquement partiellement au sein des couches laminées. Dans ces modes de réalisation, une première extrémité de l'entretoise 300 est insérée dans la structure laminée 100, la deuxième extrémité de l'entretoise étant bloquée dans la pince de serrage 200. Dans les exemples des figures 6A, 6B, la lame 310 est insérée en totalité dans la couche de matériau encapsulant 130, dans le même plan ou un plan parallèle au plan XZ contenant la couche 110 des cellules photovoltaïques de sorte que la première extrémité 313 - ou extrémité interne - de la lame 310 ne soit pas en contact avec la couche 110 de cellules photovoltaïques. La lame 310 peut présenter une épaisseur de quelques centaines de µm, par exemple 600µm, et être logée dans la couche 130 de matériau encapsulant d'une épaisseur comprise typiquement entre 0,8 et 1,2mm. Elle peut également présenter une différence d'épaisseur entre la partie 310a destinée à être laminée au sein des couches 110-130 et la partie 310b destinée à être en dehors de la structure laminée 100, cette dernière pouvant aller jusqu'à 10mm par exemple.

Dans l'exemple de la figure 6A, la lame 310 est insérée dans le matériau encapsulant entre la première couche de protection en verre 120 et la seconde couche de protection en polymère 125. Dans l'exemple de la figure 6B, la lame 310 est insérée dans le matériau encapsulant entre la première couche de protection en verre 120 et la seconde couche de protection en verre 125.

Dans les exemples des figures 6A, 6B, la seconde extrémité 312 - ou extrémité externe - située au voisinage de l'arête 160 de la structure laminée 100, est bloquée dans la pince de serrage 200. On entend par « bloquer » toute technique permettant d'empêcher un déplacement de la seconde extrémité par rapport à la structure laminée. Le blocage peut être obtenu par pincement de l'entretoise entre deux éléments ou par fixation au moyen de techniques de fixation classiques, comme par exemple par collage, soudage ou brasage ou encore par fixation mécanique du type vis/écrou ou boulon. Plusieurs moyens de fixation peuvent être combinés, comme par exemple une fixation par collage combinée avec une fixation par vis

Dans une variante, l'extrémité externe 312 de l'entretoise 300 peut faire partie intégrante de la pince 200 ; dans ce cas, la pince 200 peut comporter un élément en saillie entre les mors 212 et 216 de la pince 200, qui prend la forme d'une lame 310. L'extrémité externe de l'entretoise est alors bloquée de par sa conception sur la pince de serrage.

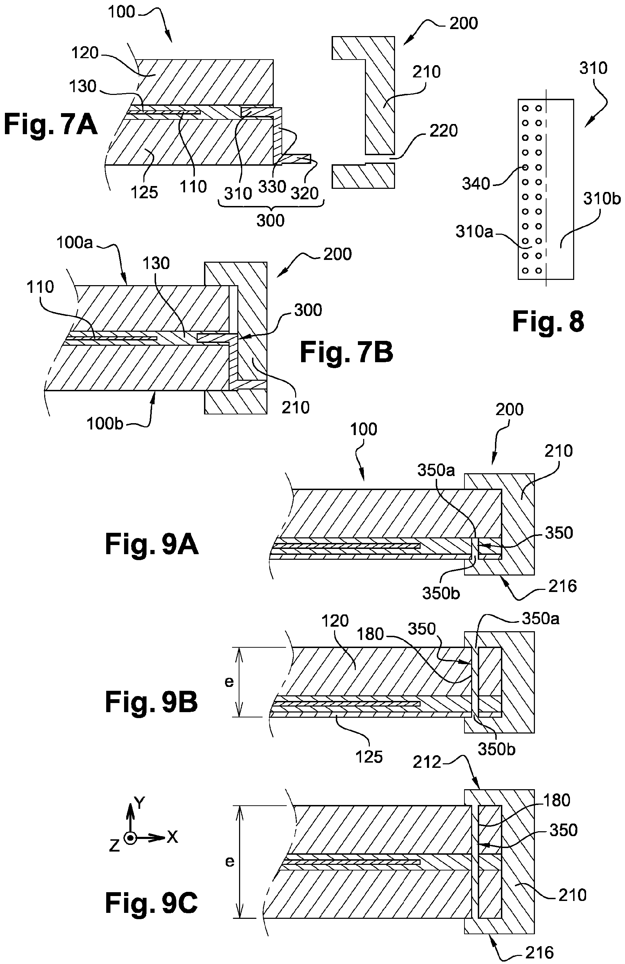

La lame 310 formant l'entretoise 300 peut être de forme rectangulaire ou de toute autre forme polygonale telle qu'une forme carrée ou losangée. Elle peut comporter une surface plane ou, au contraire, rugueuse afin d'augmenter l'adhésion avec la couche de matériau encapsulant 130. La rugosité, sur la face avant et/ou la face arrière de la lame, peut être par exemple comprise entre 0,8 et 50 µm. La lame 310, lisse ou rugueuse, peut également comporter un ou plusieurs orifices 340, comme représenté sur la figure 8, s'étendant dans toute ou partie de l'épaisseur de la lame. Ces orifices peuvent présenter des diamètres identiques ou différents pouvant s'étendre jusqu'à environ 1 cm. Dans l'exemple de lame représenté sur la figure 8, seule la partie 310a de la lame 310 destinée à être laminée au sein des couches 110-130 contient des orifices 340, la partie 310b située hors de la structure laminée 100 pouvant être pleine, sans orifices.

Dans les exemples des figures 7A-7B, l'entretoise 300 est une lame en forme de marches d'escalier dont la section a une forme de double L. Autrement dit, l'entretoise 300 comporte une première portion de lame 310 destinée à être insérée au sein de la structure laminée 100, une deuxième portion de lame 320 destinée à être fixée dans la pince de serrage 200, par exemple dans une ouverture 220, et une troisième portion de lame 330 reliant la première et la deuxième portions de lame. La première et la deuxième portions de lame 310, 320 sont dans le plan ou un plan parallèle au plan XZ contenant la couche 110 des cellules photovoltaïques, tandis que la troisième portion de lame 330 est dans un plan YZ sensiblement perpendiculaire au plan XZ. Cette forme en escalier permet à l'entretoise 300 d'épouser la forme de la structure laminée 100 de sorte à ne pas exercer de contrainte excessive sur la/les couche(s) de protection en verre 120, 125 lors de l'opération de lamination.

Dans la description qui précède, chaque lame 310 est décrite comme assurant une liaison mécanique entre la structure laminée 100 et la pince de serrage 200. On comprendra toutefois que plusieurs lames 310 peuvent relier la structure laminée 100 à une seule et même pince de serrage 200, les lames 310 pouvant être positionnées parallèlement les unes aux autres dans le plan XZ ou le plan YZ.

Dans d'autres modes de réalisation, l'entretoise 300 est insérée après lamination, comme représenté sur la figure 5. Dans ces modes de réalisation, dont des exemples sont représentés sur les figures 9A-9C, l'entretoise 300 est un élément transversal 350 en polymère ou en métal, tel qu'une barre ou une tige, de forme parallélépipédique ou cylindrique, à section circulaire, triangulaire, hexagonale ou autre. Cet élément transversal 350, appelé par la suite tige 350, est destiné à être introduit dans un orifice 180 traversant partiellement ou totalement la structure laminée 100 dans son épaisseur e.

Dans l'exemple de la figure 9A, la tige 350 traverse transversalement une partie seulement des couches de la structure laminée 100. Elle traverse en particulier la couche de protection arrière 125 ainsi que la couche de matériau encapsulant 130. Elle ne traverse pas la couche de protection avant, en verre, 120. Dans cet exemple, la tige 350 s'étend depuis le mors arrière 216 de la pince de serrage 200 jusqu'à la couche de matériau encapsulant 130, l'extrémité avant 350a de la tige 350 étant logée dans ladite couche de matériau encapsulant 130, l'extrémité arrière 350b étant bloquée dans le mors 216 par pincement de la pince de serrage 200 autour de l'arête 160 de la structure laminée 100 et de la tige 350 ou fixée dans le mors 216 par un ou plusieurs des moyens de fixation tels que ceux décrits précédemment en référence aux figures 6A-6B. Afin que la tige 350 puisse traverser partiellement la structure laminée 100, ladite structure laminée aura préalablement été percée d'un orifice non traversant, d'un diamètre supérieur ou égal au diamètre de la tige 350. Le mode de réalisation de la figure 9A permet d'assurer une bonne tenue mécanique de la pince de serrage tout en conservant une couche de protection en verre standard.

Dans les modes de réalisation des figures 9B et 9C, la partie centrale de l'entretoise 300 est insérée dans la structure laminée 100, chaque extrémité de ladite entretoise 300 étant bloquée dans la pince de serrage 200. Plus précisément, dans les exemples des figures 9B et 9C, la tige 350 traverse transversalement la totalité de la structure laminée 100. Elle traverse en particulier la couche de protection arrière 125, en polymère dans le cas de la figure 9B ou en verre dans le cas de la figure 9C, ainsi que la couche de matériau encapsulant 130 et la couche de protection avant 120. Dans cet exemple, la tige 350 s'étend entre le mors arrière 216 et le mors avant 212 de la pince de serrage 200, en traversant la structure laminée 100 de part en part.

Afin que la tige 350 puisse traverser totalement la structure laminée 100, ladite structure laminée aura préalablement été percée d'un orifice traversant, d'un diamètre supérieur ou égal au diamètre de la tige 350. Le percement de la structure laminée peut être réalisé avant ou après l'opération de lamination référencée 30 sur la figure 5. Le percement en particulier de la ou des couche(s) de protection en verre, peut lui avoir été réalisé par le fournisseur du matériau lors de la fabrication du matériau. Dans le cas d'un percement avant l'étape de lamination, le procédé de fabrication d'un module photovoltaïque comporte alors une étape supplémentaire consistant à boucher les ouvertures réalisées à l'aide de pièces recouvertes d'un revêtement peu adhérent du type polytétrafluoroéthylène (PTFE) facilitant leur retrait après la lamination. Une fois la structure laminée 100 munie de son orifice 180, la tige 350 est introduite dans ladite structure. La pince de serrage 200 est ensuite placée et serrée autour de l'arête 160 de la structure laminée de sorte à bloquer ladite tige 350. La tige 350 peut également être fixée sur le mors arrière 216 et/ou le mors avant 212 par un ou plusieurs des moyens de fixation décrits précédemment en référence aux figures 6A-6B. Les modes de réalisation des figures 9B et 9C permettent d'améliorer encore la tenue mécanique de la pince de serrage autour de la structure laminée, ladite pince de serrage ne pouvant pas se désolidariser de la structure laminée.

Dans la description qui précède, la tige 350 est décrite comme assurant une liaison mécanique entre la structure laminée 100 et la pince de serrage 200. On comprendra toutefois que plusieurs tiges 350 peuvent relier la structure laminée 100 à une seule et même pince de serrage 200, les tiges 350 étant positionnées suivant des directions sensiblement parallèles les unes aux autres.

Dans le cas où un contact électrique avec l'entretoise 300 est possible (directement ou via la pince de serrage si elle est conductrice électrique), qu'elle soit sous forme de lame 310 ou de tige 350, si l'entretoise 300 est conductrice électrique, en particulier lorsqu'elle est en métal, l'entretoise 300 est positionnée à distance des cellules photovoltaïques et de leurs interconnexions (notamment rubans métalliques) de sorte à ne pas générer de court-circuit entre les connexions internes de l'ensemble de cellules photovoltaïques et ladite entretoise. Une distance minimale, par exemple de 10mm dans le cas de matériaux de catégorie I et d'un système photovoltaïque de 1000 V, doit être respectée entre le positionnement d'une l'entretoise 300 métallique et l'ensemble de cellules photovoltaïques ; la distance est de minimum 2mm si le matériau adhésif isolant entre la face avant et la face arrière peut être considéré comme un joint collé (norme IEC 61730-1:2016).

Bien que décrit à travers un certain nombre d'exemples, variantes et modes de réalisation, le module photovoltaïque selon l'invention comprend divers variantes, modifications et perfectionnements qui apparaîtront de façon évidente à l'homme du métier.

## Revendications

1. Ensemble photovoltaïque comprenant un module photovoltaïque (500) sans cadre comportant une structure laminée (100) comportant successivement :
- une première couche de protection (120),
- un ensemble (130) encapsulant une pluralité de cellules photovoltaïques interconnectées entre elles,
- une deuxième couche de protection (125),
- au moins une pince de serrage (200) montée en lisière de la structure laminée (100), et
- au moins une entretoise (300) insérée au moins partiellement dans la structure laminée (100),
**caractérisé en ce que** l'entretoise (300) comporte
∘ une première extrémité (313) insérée dans une couche de matériau encapsulant (130) et laminée au sein de la structure laminée (100), et
∘ une deuxième extrémité (312, 350b) destinée à être bloquée dans la pince de serrage de sorte à rendre ladite entretoise solidaire de ladite pince de serrage (200).

2. Ensemble photovoltaïque selon la revendication 1, **caractérisé en ce que** la première extrémité (313) de l'entretoise est positionnée suivant un plan parallèle à l'ensemble encapsulant (130).

3. Ensemble photovoltaïque selon l'une quelconque des revendications 1 à 2, **caractérisé en ce que** l'entretoise est une lame (310).

4. Procédé de fabrication d'un ensemble photovoltaïque selon l'une quelconque des revendications 1 à 3, **caractérisé en ce qu'**il comporte :
- une étape de lamination d'un ensemble multicouche comprenant successivement :
∘ une première couche de protection (120),
∘ au moins une première couche (130) de matériau encapsulant,
∘ une pluralité de cellules photovoltaïques interconnectées entre elles,
∘ au moins une seconde couche de matériau encapsulant (130),
∘ une seconde couche de protection (125) ;
pour former la structure laminée du module photovoltaïque, et
- une étape d'insertion d'une première extrémité (313) d'une entretoise (300) dans l'une des couches de matériau encapsulant (130), et
- une étape pour bloquer une deuxième extrémité (312, 350b) de l'entretoise (300) dans la pince de serrage.

5. Procédé selon la revendication 4, **caractérisé en ce que** la première extrémité (313) de l'entretoise est insérée dans la couche de matériau encapsulant avant lamination.

## Patentansprüche

1. Photovoltaische Gruppe, umfassend ein photovoltaisches Modul (500) ohne Rahmen, umfassend eine gewalzte Struktur (100), umfassend nacheinander:
- eine erste Schutzschicht (120);
- eine Gruppe (130), die eine Vielzahl von photovoltaischen, zusammengeschalteten Zellen verkapselt;
- eine zweite Schutzschicht (125),
- wenigstens eine Spannzange (200), die am Rand der gewalzten Struktur (100) angebracht ist, und
- wenigstens einen Abstandshalter (300), der wenigstens teilweise in die gewalzte Struktur (100) eingefügt ist
**dadurch gekennzeichnet, dass** der Abstandshalter (300) umfasst:
∘ ein erstes Ende (313), das in eine verkapselnde (130) und innerhalb der gewalzten Struktur (100) gewalzten Materialschicht eingefügt ist, und
∘ ein zweites Ende (312, 350b), das dazu bestimmt ist, in der Spannzange derart blockiert zu sein, dass der genannte Abstandshalter mit der genannten Spannzange (200) fest befestigt ist.

2. Photovoltaische Gruppe gemäß Anspruch 1, **dadurch gekennzeichnet, dass** das erste Ende (313) des Abstandshalters gemäß einer zur verkapselnden Gruppe (130) parallelen Ebene angeordnet ist.

3. Photovoltaische Gruppe gemäß irgendeinem der Ansprüche 1 bis 2, **dadurch gekennzeichnet, dass** der Abstandshalter eine Lamelle (310) ist.

4. Herstellungsverfahren einer photovoltaischen Gruppe gemäß irgendeinem der Ansprüche 1 bis 3, **dadurch gekennzeichnet, dass** es umfasst:
- einen Walzschritt einer mehrschichtigen Gruppe, umfassend nacheinander:
∘ eine erste Schutzschicht (120),
∘ wenigstens eine erste Schicht (130) aus verkapselndem Material,
∘ eine Vielzahl von zusammengeschalteten photovoltaischen Zellen,
∘ wenigstens eine zweite Schicht aus verkapselndem Material (130),
∘ eine zweite Schutzschicht (125);
zum Bilden der gewalzten Struktur des photovoltaischen Moduls und
- einen Einführschritt eines ersten Endes (313) eines Abstandshalters (300) in eine der verkapselnden Materialschichten (130) und
- einen Schritt zum Blockieren eines zweiten Endes (312, 350b) des Abstandshalters (300) in die Spannzange.

5. Verfahren gemäß Anspruch 4, **dadurch gekennzeichnet, dass** das erste Ende (313) des Abstandshalters vor dem Walzen in die verkapselnde Materialschicht eingeführt wird.

## Claims

1. A photovoltaic assembly comprising a frameless photovoltaic module (500) comprising a laminated structure (100) successively comprising:
- a first protective layer (120),
- an assembly (130) encapsulating a plurality of photovoltaic cells interconnected to each other,
- a second protective layer (125),
- at least one collet (200) mounted at the edge of the laminated structure (100), and
- at least one spacer (300) at least partially inserted into the laminated structure (100), **characterised in that** the spacer (300) includes
∘ a first end (313) inserted into a layer (130) of encapsulating material and laminated within the laminated structure (100), and
∘ a second end (312, 350b) for being blocked in the collet so as to make said spacer integral with said collet (200).

2. The photovoltaic assembly according to claim 1, **characterised in that** the first end (313) of the spacer is positioned along a plane parallel to the encapsulating assembly (130).

3. The photovoltaic assembly according to any of claims 1-2, **characterised in that** the spacer is a blade (310).

4. A method for manufacturing a photovoltaic assembly according to any of claims 1-3, **characterised in that** it includes:
- a step of lamination a multilayer assembly, successively comprising:
∘ a first protective layer (120),
∘ at least one first layer (130) of encapsulating material,
∘ a plurality of photovoltaic cells interconnected to one another,
∘ at least one second layer (130) of encapsulating material,
∘ a second protective layer (125);
in order to form the laminated structure of the photovoltaic module, and
- a step of inserting a first end (313) of a spacer (300) into one of the layers (130) of encapsulating material, and
- a step of blocking a second end (312, 350b) of the spacer (300) into the collet.

5. The method according to claim 4, **characterised in that** the first end (313) of the spacer is inserted into the layer of encapsulating material before lamination.
